# FASCICULE DE BREVET EUROPEEN

(11) **EP 1 686 272 B1**
(45) Date de publication et mention de la délivrance du brevet: **26.03.2008**
(21) Numéro de dépôt: 06354004.1
(22) Date de dépôt: 24.01.2006
(51) Int. Cl.: F16B 31/02

(54) **Dispositif de montage secable a vis pour un appareillage electrique**
Abtrennbare Montageeinrichtung mit einer Schraube für ein elektrisches Gerät
Separable mounting device including a screw for an electrical apparatus

(30) Priorité: 01.02.2005 FR 0500994
(43) Date de publication de la demande: 02.08.2006
(73) Titulaire: SCHNEIDER ELECTRIC INDUSTRIES SAS, 92500 Rueil-Malmaison (FR)
(72) Inventeur: Chaumette, Laurent, Schneider Electric Ind. SAS, 38050 Grenoble Cedex 09 (FR); Aureyre, Laurent, Schneider Electric Ind. SAS, 38050 Grenoble Cedex 09 (FR)
(74) Mandataire: Tripodi, Paul

(56) Documents cités:
- FR-A- 2 840 373

## Description

### DOMAINE TECHNIQUE DE L'INVENTION

L'invention est relative à un dispositif de montage par vissage à limitation du couple de serrage, comportant une vis pourvue d'une tête de vis et d'une tige filetée définissant un axe géométrique de référence, un embout de serrage monobloc sécable pourvu d'une tête de serrage ayant un relief de serrage, d'un relief d'accouplement pour coopérer avec la tête de vis et d'une zone de rupture. Un manchon isolant est surmoulé sur l'embout de serrage et la tête de vis. Le manchon est pourvu de premiers moyens d'accouplement pour solidariser la tête de serrage et le relief d'accouplement et de deuxièmes moyens d'accouplement pour solidariser la tête de vis et le relief d'accouplement. Lesdits seconds moyens d'accouplement comportent une première portion solidaire en rotation de la tête de serrage, une deuxième portion solidaire en rotation de la tête de vis, et une troisième portion intermédiaire sécable.

### ETAT DE LA TECHNIQUE ANTERIEURE

De nombreux brevets GB898026, FR2593572, FR2791404 décrivent des dispositifs de montage comportant des vis sécables permettant de limiter le couple de serrage au moment de l'assemblage de deux pièces.

Parmi les solutions existantes, la solution de la demanderesse exposée dans le document FR2840373, décrit un dispositif de montage comportant une vis 10 et un embout de serrage monobloc 12 qui permet et impose lors du montage de la vis 10, un serrage calibré avec un couple de serrage à la fois élevé et précis. Cette solution est particulièrement adaptée à un environnement électrique compte tenu que certaines parties du dispositif sont isolées électriquement au moyen d'un manchon isolant 14.

Le manchon isolant 14 est positionné sur les parties métalliques 12, 24 par un surmoulage à chaud.

L'utilisation de manchon 14 plastique surmoulé peut cependant présenter certains inconvénients. En effet, le matériau isolant positionné à chaud peut s'infiltrer entre les pièces métalliques 12, 14 et provoquer leur collage. Ainsi, après le serrage, le retrait de l'embout de serrage 12 peut nécessiter des efforts non négligeables.

### EXPOSE DE L'INVENTION

L'invention vise donc à remédier aux inconvénients de l'état de la technique, de manière à proposer un dispositif de montage qui impose un serrage calibré, élevé et précis et dont le démontage après serrage soit aisé.

Le dispositif de montage selon l'invention comprend, au niveau de la partie supérieure de la tête de vis, un décalage radial entre la paroi interne du manchon et la paroi interne du relief de serrage, la tige intermédiaire reposant sur un épaulement constitué d'une portion de la partie supérieure de la tête de vis.

De préférence, l'épaulement forme par rapport à l'axe géométrique de référence, un angle α sensiblement égal à 90 degrés.

Dans un mode particulier de réalisation, l'épaulement a une forme conique ayant un angle α compris entre 20 et 90 degrés par rapport à l'axe géométrique de référence.

Dans un second mode particulier de réalisation, l'épaulement a une forme courbée reprenant une portion d'arc de cercle ou de parabole.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :

la figure 1 représente, en coupe axiale, un dispositif de montage suivant un mode connu de réalisation ;

la figure 2 représente, en coupe axiale, un dispositif de montage suivant un mode de réalisation de l'invention ;

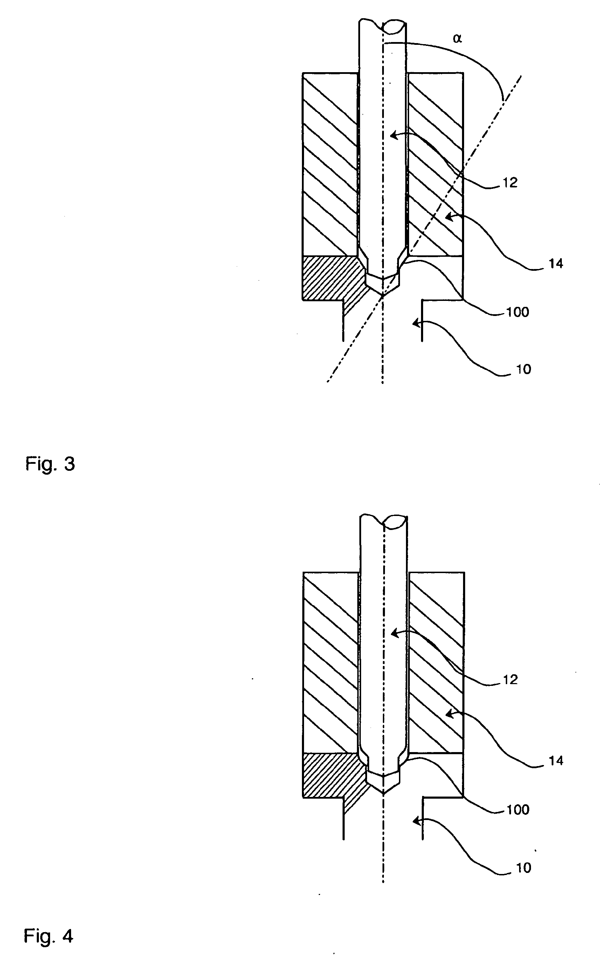

les figures 3 et 4 représentent, en coupe axiale, des vues schématiques de variante de réalisation de l'invention selon la figure 2.

### DESCRIPTION DETAILLEE D'UN MODE DE REALISATION

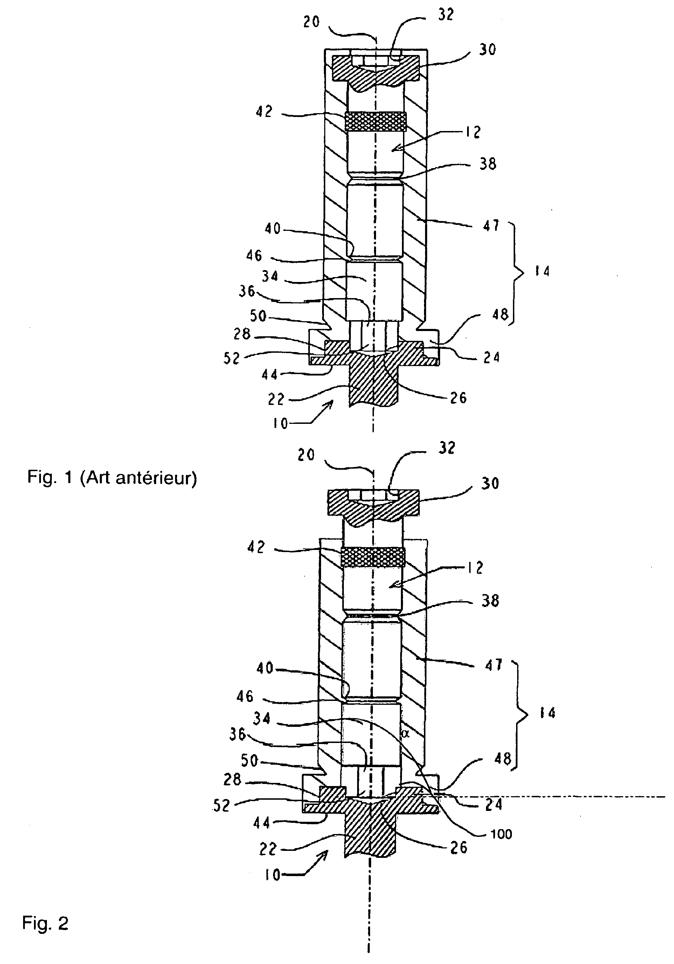

En référence à la figure 2, un dispositif de montage selon un mode de réalisation de l'invention se présente, avant montage, comme la superposition d'une vis métallique 10, d'un embout de serrage monobloc 12 également métallique, et d'un manchon isolant 14 en matière synthétique enveloppant l'embout de serrage 12 et la tête 24 de la vis 10, ces éléments ayant un axe géométrique de référence 20 commun. La vis 10 est constituée d'une tige filetée 22 suivant une hélice d'axe 20 et d'une tête cylindrique 24 formant un relief de serrage 26. Comme cela est représenté sur la figure, à titre d'exemple, le relief de serrage 26 a six pans creux. Le pourtour cylindrique 28 de la tête 24 est moleté. L'embout de serrage 12 comporte une tête cylindrique 30 munie d'un relief de serrage 32 identique à celui de la tête de vis 24, une tige intermédiaire 34 et une extrémité 36 enfoncée dans le relief de serrage 26 de la tête de vis 24. L'extrémité 36 male de section hexagonale correspond à la forme du relief de serrage 26 à six pans creux.

Un col de rupture 38, en pratique une entaille, est formé sur la tige intermédiaire 34 entre ses deux extrémités et divise l'embout 12 en une partie supérieure comportant la tête 30 et une partie inférieure comportant l'extrémité hexagonale 36. Une gorge radiale 40 est formée entre le col 38 et l'extrémité hexagonale 36. Entre la tête 30 et le col 38, une portion de la tige comprend un relief moleté 42.

Le manchon isolant 14 est surmoulé autour sur l'embout de serrage 12 et la tête de la vis 24, laissant accessible le relief de serrage à six pans creux 32 de la tête 30 de l'embout 12. Le manchon forme un corps 47 recouvrant l'embout 12 et une jupe 48 qui recouvre la tête de vis 24. La tige 22 de la vis et l'épaulement 44 formé par la partie inférieure de la tête de vis 24 ne sont pas recouverts. Une entaille radiale de rupture 50 située juste au-dessus de la tête de vis 24 sépare le corps 47 de la jupe 48. Les portions moletées 28, 42 de la tête de vis et de la tige intermédiaire de l'embout de serrage constituent des zones rendant solidaires respectivement le manchon 14 et la vis 10 d'une part, et le manchon 14 et la partie supérieure de l'embout 12 d'autre part. Une nervure intérieure 46 est formée lors du moulage du manchon 14 au niveau de la gorge 40. Ainsi sont réalisés des premiers moyens d'accouplement en translation suivant l'axe 20, entre la tête de serrage 30 et l'extrémité hexagonale 36, par l'intermédiaire de la zone moletée 42, du corps 47 du manchon 14 et de la nervure 46 insérée dans la gorge 40. Des seconds moyens d'accouplement en translation sont également obtenus entre la tête de vis 24 et l'extrémité hexagonale 36, par l'intermédiaire de la zone moletée 28, de la jupe 48, de l'entaille 50, du corps 47 du manchon 14 et de la nervure 46 insérée dans la gorge 40.

L'ensemble de ces caractéristiques est décrit dans le brevet de la demanderesse FR2840373, dont la description est sur ces points incorporée ici par référence.

Il existe au niveau de la partie supérieure de la tête de vis 24, un décalage radial entre la paroi interne du manchon 47 et la paroi du relief de serrage 26. Du fait de ce décalage, la tige intermédiaire 34 repose sur un épaulement 100 constitué d'une portion de la partie supérieure de la tête de vis 24.

Selon le mode préférentiel de réalisation de l'invention, l'épaulement 100 forme par rapport à l'axe géométrique de référence 20, un angle α sensiblement égal à 90 degrés.

Ainsi, selon une direction perpendiculaire à l'axe de référence 20, le manchon 47 se trouve déporté par rapport au relief de serrage 26. Au moment du surmoulage du manchon 47 sur l'embout de serrage 12 et sur la tête de vis 24, le risque de pénétration ou d'infiltration de matière fondue à l'intérieur relief de serrage 26 est fortement réduit grâce à cette disposition originale ; ces infiltrations de matière provoquant un collage de l'extrémité 36 de la partie intermédiaire 34 à l'intérieur de la tête de vis 24.

En outre, grâce à cette configuration géométrique, les efforts nécessaires au retrait de l'embout de serrage 12 sont réduits d'un facteur supérieur à 10.

Pour monter la vis 10, on présente le dispositif de montage monobloc en position de vissage, et on utilise une clef hexagonale mâle insérée dans la tête 30 de l'embout pour visser le dispositif suivant l'axe 20. Le couple de vissage est quasi-intégralement transmis par la tige intermédiaire 34 à la tête de vis 24 et le manchon 14 n'est quasiment pas sollicité. Lorsque la vis 10 se bloque, l'opérateur doit encore imposer un couple suffisant pour rompre la tige intermédiaire 34 au niveau de la zone de rupture 38. Ce couple de rupture est calibré pour correspondre au couple de serrage souhaité pour la vis 10 dans son application. Une fois le col cassé 38, la tête 30 de l'embout reste solidaire de la tête de vis 24, par l'intermédiaire du manchon 14. L'extrémité du manchon 14 étant solidarisée à la tête de vis 24 par la zone moletée 28, un faible couple exercé sur la tête 30 et transmis au manchon 14 au niveau de la zone moletée 42, suffit à provoquer la rupture du manchon 14 au niveau de l'entaille 50. Il y a alors séparation du dispositif de montage en deux parties : la vis 10 d'une part, dont la tête 26 est isolée par la jupe 48 du manchon, et le sous-ensemble constitué par l'embout 12 et la partie supérieure du manchon 14 d'autre part. Ce sous-ensemble présente une surface isolante cylindrique sur la majeure partie de sa périphérie, ce qui permet d'éviter tout risque de court-circuit si ce sous-ensemble est oublié.

Il est noter que le dispositif impose un couple de serrage de la vis précis correspondant au couple de rupture du col, car tant que le col et le manchon ne sont pas rompus, le dispositif reste d'un seul tenant, et l'encombrement de l'embout interdit les opérations de montage devant succéder au vissage de la vis. Il n'est pas non plus possible de frauder le limiteur de couple puisque la vis 10 n'offre pas de prise tant qu'elle est solidaire de l'embout 12, de sorte que l'on garantit que la vis 10 n'est pas serrée au-delà du couple de rupture. Enfin, la rupture au niveau de l'entaille 50 donne accès au relief à six pans creux de la tête de vis, par l'intermédiaire d'un orifice 52 libéré par l'extrémité hexagonale 36, ce qui permet le cas échéant le démontage de la vis 10. L'outil de démontage peut être identique à l'outil de montage car les reliefs de montage 26 de la tête de vis et ceux 32 de la tête de l'embout sont identiques.

Selon une première variante de réalisation de l'invention, le décalage radial entre la paroi interne du manchon 47 et la paroi du relief de serrage 26 constitue d'un épaulement 100 conique dont l'angle α compris entre 20 et 90 degrés par rapport à l'axe géométrique de référence 20.

Selon une seconde variante de réalisation de l'invention, le décalage radial entre la paroi interne du manchon 47 et la paroi du relief de serrage 26 constitue d'un épaulement 100 de forme courbée reprenant une portion d'arc de cercle ou de parabole.

## Revendications

1. Dispositif de montage par vissage à limitation du couple de serrage, comportant une vis (10) pourvue d'une tête de vis (24) et d'une tige filetée (22) définissant un axe géométrique de référence (20), un embout de serrage monobloc sécable (12) pourvu d'une tête de serrage (30) ayant un relief de serrage (32), d'un relief d'accouplement (36) pour coopérer avec la tête de vis (24) et d'une zone de rupture (38), un manchon (14) isolant surmoulé sur l'embout de serrage (12) et la tête de vis (24) pourvu de premiers moyens d'accouplement (42, 46) pour solidariser la tête de serrage (32) et le relief d'accouplement (36) et de deuxièmes moyens d'accouplement (28, 46) pour solidariser la tête de vis (24) et le relief d'accouplement (36), lesdits seconds moyens d'accouplement comportant une première portion (47) solidaire en rotation de la tête de serrage (30), une deuxième portion (48) solidaire en rotation de la tête de vis (24), et une troisième portion intermédiaire sécable (50) **caractérisé en ce qu'**il comprend, au niveau de la partie supérieure de la tête de vis (24), un décalage radial entre la paroi interne du manchon (47) et la paroi interne du relief de serrage (26), la tige intermédiaire (34) reposant sur un épaulement (100) constitué d'une portion de la partie supérieure de la tête de vis (24).

2. Dispositif selon la revendication 1, **caractérisé en ce que** l'épaulement (100) forme par rapport à l'axe géométrique de référence (20), un angle (α) sensiblement égal à 90 degrés.

3. Dispositif selon la revendication 1, **caractérisé en ce que** l'épaulement (100) a une forme conique ayant un angle (α) compris entre 20 et 90 degrés par rapport à l'axe géométrique de référence (20).

4. Dispositif selon la revendication 1, **caractérisé en ce que** l'épaulement (100) a une forme courbée reprenant une portion d'arc de cercle ou de parabole.

## Claims

1. An assembly device by screwing with tightening torque limiting, comprising a screw (10) provided with a screw head (24) and with a threaded shank (22) defining a geometric reference axis (20), a sectile monoblock tightening end-piece (12) provided with a tightening head (30) having a tightening profile (32), with a coupling profile (36) to operate in conjunction with the screw head (24) and with a breaking zone (38), an insulating sleeve (14) moulded onto the tightening end-piece (12) and the screw head (24) provided with first coupling means (42, 46) to secure the tightening head (32) and the coupling profile (36) and with second coupling means (28, 46) to secure the screw head (24) and the coupling profile (36), said second coupling means comprising a first portion (47) securedly fixed in rotation to the tightening head (32), a second portion (48) securedly fixed in rotation to the screw head (24), and a sectile third intermediate portion (50), **characterized in that** it comprises, at the top part of the screw head (24), a radial offset between the inside wall of the sleeve (47) and the inside wall of the tightening profile (26), the intermediate shank (34) resting on a rim (100) formed by a portion of the top part of the screw head (24).

2. The device according to claim 1, **characterized in that** the rim (100) forms an angle (α) substantially equal to 90 degrees with respect to the geometric reference axis (20).

3. The device according to claim 1, **characterized in that** the rim (100) has a conical shape having an angle (α) comprised between 20 and 90 degrees with respect to the geometric reference axis (20).

4. The device according to claim 1, **characterized in that** the rim (100) has a curved shape in the form of a portion of an arc of a circle or a parabola.

## Patentansprüche

1. Schraubmontagevorrichtung mit Anziehmomentbegrenzung, welche Vorrichtung eine Schraube (10) mit einem Schraubenkopf (24) und einem Gewindestift (22), durch die eine geometrische Bezugsachse (20) definiert wird, einen abtrennbaren einstückigen Eindrehzapfen (12), der einen Eindrehkopf (30) mit einem Angriffsprofil (32) aufweist, ein Übertragungsprofil (36), das dazu dient, mit dem Schraubenkopf (24) und einer Sollbruchstelle (38) zusammenzuwirken, sowie eine durch Heißpressen auf dem Eindrehzapfen (12) und dem Schraubenkopf (24) aufgebrachte Isolierstoffhülse (14) mit ersten Verbindungsmitteln (42, 46) zur Verbindung des Eindrehkopfes (32) und des Übertragungsprofils (36) sowie mit zweiten Verbindungsmitteln (28, 46) zur Verbindung des Schraubenkopfes (24) und des Übertragungsprofils (36) umfasst, wobei die zweiten Verbindungsmittel einen ersten Abschnitt (47), der drehwirksam mit dem Eindrehkopf (30) verbunden ist, einen zweiten Abschnitt (48), der drehwirksam mit dem Schraubenkopf (24) verbunden ist, und einen dritten, aufbrechbaren Zwischenabschnitt (50) umfasst, **dadurch gekennzeichnet, dass** die Vorrichtung an der Oberseite des Schraubenkopfes (24) einen radialen Versatz zwischen der Innenwand der Hülse (47) und der Innenwand des Angriffsprofils (26) aufweist, wobei sich der Zwischenschaft (34) auf einer Schulter abstützt, die durch einen Teil der Oberseite des Schraubenkopfes (24) gebildet wird.

2. Vorrichtung nach Anspruch 1, **dadurch gekennzeichnet, dass** die Schulter (100) mit der geometrischen Bezugsachse (20) einen Winkel (α) von annähernd 90 Grad bildet.

3. Vorrichtung nach Anspruch 1, **dadurch gekennzeichnet, dass** die Schulter (100) eine konische Form mit einem Winkel zwischen 20 und 90 Grad zur geometrischen Bezugsachse (20) aufweist.

4. Vorrichtung nach Anspruch 1, **dadurch gekennzeichnet, dass** die Schulter (100) eine gekrümmte Form mit einem kreisbogen- oder parabelförmigen Abschnitt aufweist.
